# EUROPEAN PATENT APPLICATION

(11) **EP 4 654 173 A1**
(43) Date of publication of application: **26.11.2025**
(21) Application number: 25176467.6
(22) Date of filing: 14.05.2025
(51) Int. Cl.: G08G 5/51, G08G 5/80

(54) **AUTOMATED AIRCRAFT TAXI SYSTEM WITH SELECTIVE ANTI-INCURSION FUNCTION**

(30) Priority: 20.05.2024 US 202463649690 P
(71) Applicant: AIRBUS S.A.S., 31700 Blagnac Cedex (FR); AIRBUS OPERATIONS (S.A.S.), 31060 Toulouse (FR)
(72) Inventor: LAURENS, Pascal, 31060 TOULOUSE (FR); BIZET, Pierre, 31700 BLAGNAC (FR); PERRIN, Fabien, 31700 BLAGNAC (FR); RIGAUD, Jonathan, 31700 BLAGNAC (FR); SERVOLES, Sébastien, 31700 BLAGNAC (FR); LACOUTURE, Guillaume, 31700 BLAGNAC (FR)
(74) Representative: Cabinet Le Guen Maillet

(57) **Abstract**

An automated aircraft taxi system comprises: a mapping module obtaining (401) an airport map representing an airport environment; a path trajectory module receiving (402) a digital taxi clearance identifying a destination within the airport environment and generating (403) accordingly a taxi path trajectory; a guidance module computing (404) guidance instructions based on the taxi path trajectory; and a protection module identifying (421) incursion risks on the taxi path trajectory and adapting the guidance instructions accordingly, such that an anti-incursion function triggers automatic braking of the aircraft and/or alert the pilot when approaching an incursion-risk area. The anti-incursion function selectively disregards (422) an entry point to such an incursion-risk area when approaching said entry point, according to whether or not the aircraft is subject to enter said incursion-risk area through said entry point according to the taxi path trajectory. Thus, automated aircraft taxi operations are improved.

## Description

### TECHNICAL FIELD

The subject matter disclosed herein relates generally to systems and methods for automated operation of an aircraft during a taxi phase in an airport environment.

### RELATED ART

During the taxi phase of aircraft operation, where the aircraft taxies within an airport environment to a destination, such as a designated runway from which the aircraft will take off, the pilot must perform many tasks including for example communicating with Air Traffic Control (ATC) to confirm authorization to proceed to the designated take-off runway and departure slot, determine an appropriate taxi speed, identify possible obstacles or incursions along the taxi path, and, when arriving at the designated take-off runway, determine a correct take-off speed and required runway length. Moreover, as another example, another task is to ensure clearance of the designated take-off runway before entering the runway to line up for take-off, or clearance of an intervening runway to be crossed before being able to reach the destination.

Various functional features have been developed and tested to automate such tasks during taxi operation, such as automated guidance, anti-collision protection, digital clearance from Air Traffic Control (ATC), and guidance on the taxiway via lighting systems. However, there still exists room for improvement of such automated operation during the taxi phase to reduce the pilot's workload, taking into account that spurious triggering of alerts and uncomfortable automated actions shall be avoided.

### SUMMARY OF THE INVENTION

To this end, it is proposed herein an automated aircraft taxi system for an aircraft, which comprises:
- a mapping module configured to obtain an airport map representing an airport environment;
- a path trajectory module configured to receive a digital taxi clearance identifying a destination within the airport environment and to generate a taxi path trajectory to the destination on the airport map;
- a guidance module configured to compute guidance instructions based on the taxi path trajectory; and
- a protection module configured to receive the taxi path trajectory on the airport map, to identify incursion risks on the taxi path trajectory to the destination and to adapt the guidance instructions to manage the incursion risks, such that the protection module is configured to execute an anti-incursion function that triggers automatic braking of the aircraft and/or alert the pilot when approaching an incursion-risk area,
wherein the anti-incursion function is configured to selectively disregard or watch out an entry point to an incursion-risk area when approaching said entry point to the incursion-risk area, according to whether or not the aircraft is subject to enter said incursion-risk area through said entry point according to the taxi path trajectory on the airport map.

Thus, thanks to the automated aircraft taxi system as configured above, the automated operation during the taxi phase reduces the pilot's workload and spurious triggering of alerts to the pilot and/or uncomfortable actions, such as unnecessary auto-braking, are avoided.

In a particular embodiment, the incursion-risk area comprises a runway.

In a particular embodiment, for each incursion-risk area along the trajectory path on the airport map, the anti-incursion function is configured to identify possible incursion protection zones of the incursion-risk area in question, such an incursion protection zone being a taxiway zone covering an entry point to the incursion-risk area in question, and to check whether or not each incursion protection zone corresponds to a targeted entry point to the incursion-risk area in question in view of the taxi path trajectory, and
wherein the automated aircraft taxi system is configured to configure the anti-incursion function to disregard each incursion protection zone for any entry point to the incursion-risk area to be bypassed according to the taxi path trajectory.

In a particular embodiment, the protection module is configured to execute a collision-avoidance function that triggers automatic braking of the aircraft and/or alert the pilot when approaching an obstacle,
wherein the collision-avoidance function is configured to selectively disregard or watch out an obstacle according to whether or not the obstacle collides with the taxi path trajectory.

In a particular embodiment, the airport map identifies traffic within the airport environment.

In a particular embodiment, the airport map is a collaborative map that includes surrounding airport traffic information based on inputs from several sources including taxi clearances from an Air Traffic Control equipment and flight dispatch from Operations Control Center equipment.

In a particular embodiment, the automated aircraft taxi system further comprises a virtual assistant module configured to derive information from the collaborative map such that the traffic at the airport is forecasted to generate a modified taxi path trajectory based on predetermined constraints to be fulfilled during taxiing and the information derived from the collaborative map;
wherein the guidance module is configured to compute the guidance instructions based on the modified taxi path trajectory.

It is also proposed herein an automated aircraft taxi method executed by an automated aircraft taxi system in an aircraft, which comprises:
- obtaining an airport map representing an airport environment;
- receiving a digital taxi clearance identifying a destination within the airport environment and generating a taxi path trajectory to the destination on the airport map;
- computing guidance instructions based on the taxi path trajectory; and
- identifying incursion risks on the taxi path trajectory to the destination and adapting the guidance instructions to manage the incursion risks, such that an anti-incursion function that triggers automatic braking of the aircraft and/or alert the pilot when approaching an incursion-risk area is executed,
wherein the anti-incursion function selectively disregards or watches out an entry point to an incursion-risk area when approaching said entry point to the incursion-risk area, according to whether or not the aircraft is subject to enter said incursion-risk area through said entry point according to the taxi path trajectory on the airport map.

It is also proposed herein a computer program product comprising executable instructions, which when executed by a processing circuit of a computing device causes the computing device to execute the method above. It is also proposed herein a non-transitory computer-readable storage medium having executable instructions stored thereon, which when read from the non-transitory computer-readable storage medium and executed by a processing circuit of a computing device causes the computing device to execute the method above.

It is also proposed herein an aircraft comprising the automated aircraft taxi system above in any one of its embodiments.

### BRIEF DESCRIPTION OF THE DRAWINGS

The characteristics of the invention will emerge more clearly from a reading of the following description of at least one example of embodiment, said description being produced with reference to the accompanying drawings, among which:
- Fig. 1 schematically represents a top view of an aircraft having an automated aircraft taxi system;
- Fig. 2 schematically represents an example of a hardware system which can be used to implement the automated aircraft taxi system;
- Fig. 3 schematically represents the automated aircraft taxi system, in one embodiment;
- Fig. 4 schematically represents an algorithm for activating protection functions, in one embodiment;
- Fig. 5 schematically represents an airport map representation with a taxi path trajectory in one embodiment;
- Fig. 6 schematically represents an airport map representation with a taxi path trajectory in one other embodiment;
- Fig. 7 schematically represents an algorithm for selectively activating an anti-incursion function, according to one embodiment; and
- Fig. 8 schematically represents an airport map representation showing incursion protection zones.

### DETAILED DESCRIPTION OF AT LEAST ONE EMBODIMENT

The present subject-matter provides systems and methods which provide automated taxi functionality for a taxi phase during which an aircraft travels within an airport environment to reach a destination, for example to reach a designated runway to carry out the take-off or to reach an airport's gate.

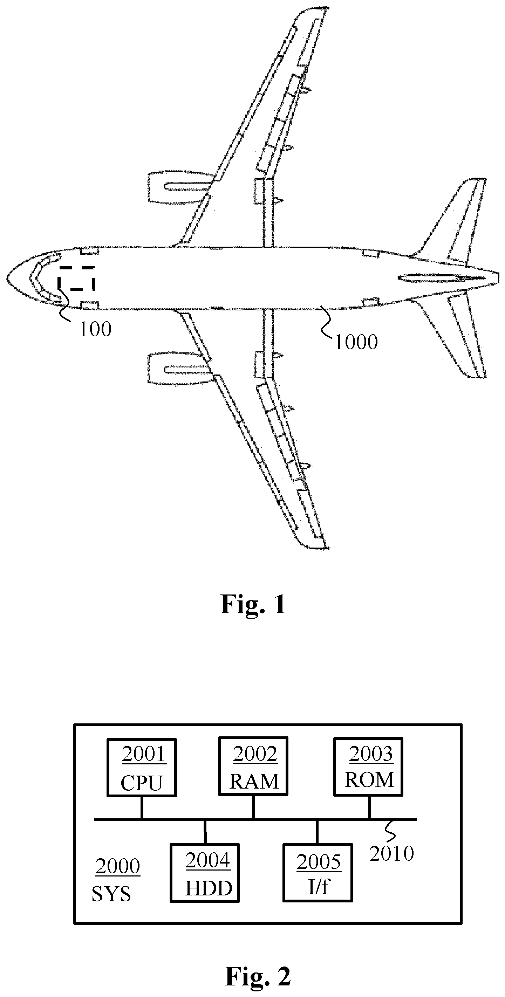

**Fig. 1** schematically represents a top view of an aircraft 1000. The aircraft 1000 comprises avionics equipment, which provides computing ability to the aircraft 1000. The aircraft 1000 comprises human-machine interface enabling devices in the cockpit in conjunction with the avionics equipment, such as displays or touch screens or EFB (Electronic Flight Bag) device, thus enabling interactions with the pilot of the aircraft.

The aircraft's avionics equipment includes a position-awareness equipment enabling the avionics to know in real-time the geographical position of the aircraft 1000, such as a GNSS (Global Navigation Satellite System) receiver, for example a GPS (Global Positioning System) receiver, a GLONASS receiver, a Galileo receiver...

The aircraft's avionics equipment further includes at least one communication interface configured to enable communications with Air Traffic Control (ATC) equipment of the airport's control tower and preferably with Operations Control Center (OCC) equipment of an airline with which the aircraft is associated.

The aircraft 1000 embeds an automated aircraft taxi system 100, for example as part of the aircraft's avionics equipment, which is configured to implement an anti-incursion function and preferably an obstacle-avoidance function, as disclosed hereafter.

**Fig. 2** schematically represents an example of a hardware system SYS 2000 which can be used to implement the automated aircraft taxi system 100. The hardware system SYS 2000 can be used as well to implement other aircraft's avionics functionalities.

According to the shown example, the hardware system SYS 2000 comprises at least the following components interconnected by a communication bus 2010: a processor, microprocessor, microcontroller or CPU (Central Processing Unit) 2001; a RAM (Random-Access Memory) 2002; a ROM (Read-Only Memory) 2003 or an EEPROM (Electrically-Erasable Programmable ROM) such as a Flash memory; an HDD (Hard-Disk Drive) 2004 or an SD (Secure Digital) card reader, or any other device adapted to read information stored on non-transitory information storage medium; and at least one interface I/f 2005 including preferably a communication interface to enable communicating with other equipment of the aircraft 1000 or with the ATC equipment or with the OCC equipment.

The CPU 2001 is capable of executing instructions loaded into the RAM 2002 from the ROM 2003 or from an external memory, such as an SD card. After the hardware system SYS 2000 has been powered on, the CPU 2001 is capable of reading instructions from the RAM 2002 and executing these instructions. The instructions form one or more computer program products that cause the CPU 2001 to perform some or all of the actions disclosed herein with respect to the automated aircraft taxi system 100 or other aircraft's avionics equipment.

The subject matter disclosed herein can be implemented in or with software in combination with hardware and/or firmware. For example, the subject matter described herein can be implemented in software by execution of a set of instructions or program by a processor or processing unit or a programmable computing machine, such as a DSP (Digital Signal Processor). The subject matter disclosed herein can be implemented in hardware form by a machine or a dedicated chip or chipset, such as an FPGA (Field-Programmable Gate Array) or an ASIC (Application-Specific Integrated Circuit). In general, the automated aircraft taxi system 100 and the aircraft's avionics equipment comprise processing electronics circuitry adapted and configured for implementing the subject matter disclosed herein.

In some embodiments, the present subject matter can be implemented by at least one avionics computer of the aircraft 1000, in relation with a display in the cockpit. As an alternative, the present subject matter can be implemented on an EFB (Electronic Flight Bag) device, receiving information from the aircraft's avionics equipment.

Some embodiments of the disclosed system may be implemented, for example, using a storage medium, a computer-readable medium or an article of manufacture which may store an instruction or a set of instructions that, when executed by a machine (e.g., processor, processing circuit, or microcontroller), may cause the machine to perform a method and/or operations in accordance with embodiments of the disclosure. In addition, a server or database server may include machine readable media configured to store machine executable program instructions. Such a machine may include, for example, any suitable processing platform, computing platform, computing device, processing device, computing system, processing system, computer, processor, or the like, and may be implemented using any suitable combination of hardware, software, firmware, or a combination thereof and utilized in systems, subsystems, components, or sub-components thereof. The computer-readable medium or article may include, for example, any suitable type of memory unit, memory device, memory article, memory medium, storage device, storage article, storage medium and/or storage unit, for example, memory (including non-transitory memory), removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

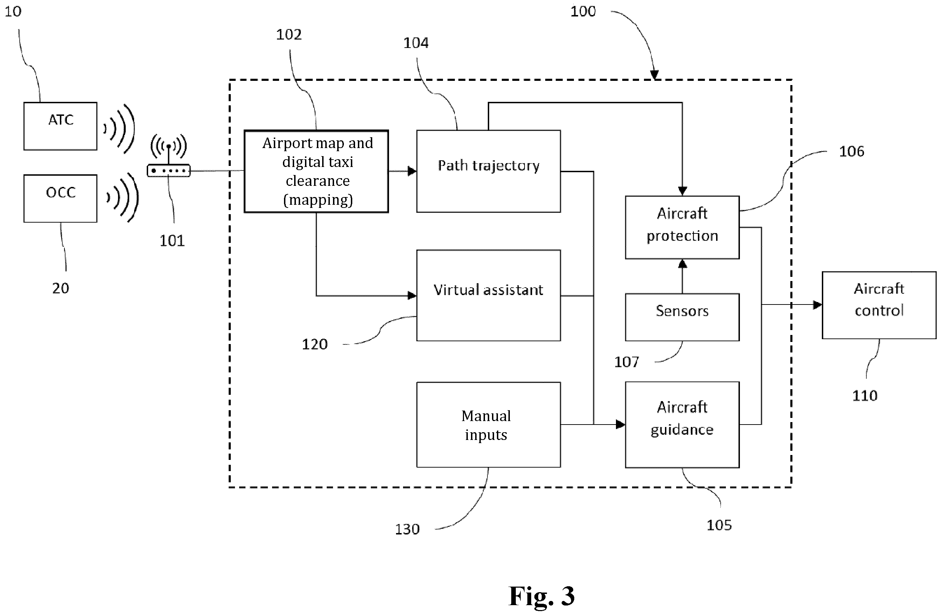

**Fig. 3** schematically represents the automated aircraft taxi system 100, in one embodiment.

The automated aircraft taxi system 100 is configured to obtain an airport map representing the airport environment through which the aircraft 1000 shall carry out the taxi phase. The automated aircraft taxi system 100 is, in some embodiments, connected to a network 101 that is configured to communicate with the ATC equipment 10 and/or the OCC equipment 20 in order to receive the airport map.

In some embodiments, the network 101 can include any suitable network structure to enable the ATC equipment 10 and the OCC equipment 20 to communicate with computing devices onboard the aircraft 1000, especially for preparing the taxi phase or preferable during the taxi phase or even also during flight. For example, in some embodiments, the network 101 includes a mobile communications network such as 3G, Long Term Evolution (LTE), 4G, 5G, 6G, or any other suitable mobile communications network. According to another example, in some embodiments, the network 101 includes a satellite-based communications network. According to another example, in some embodiments, the network 101 includes a wired network, for when the aircraft is on the ground at an airport's gate, and preparing for takeoff (boarding, refueling...). In some embodiments the network includes a wireless fidelity (Wi-Fi) network or Wireless Local Area Network (WLAN), for example, when the aircraft 1000 is on the ground and is in close proximity to a Wireless Access Points (WAP).

The automated aircraft taxi system 100 includes a mapping module 102 that is configured to obtain the airport map. In some embodiments, the airport map identifies traffic within the airport environment. Preferably, the airport map is a collaborative map that includes surrounding airport traffic information based on inputs from several sources including taxi clearances from the ATC equipment 10 and flight dispatch from the OCC equipment 20. In this way, the mapping module 102 improves the communication technology between the pilot, the ATC and the OCC, by providing a structure to support the collaborative map, gathering and updating multiple sources of geo-referenced data, which thus enhances situational awareness of the pilot, the ATC, and the OCC, and optimizes clearance management and supports for weather avoidance.

In addition, the mapping module 102 is configured to receive digital taxi clearance from the ATC equipment 10 identifying a destination (such as a designated take-off runway) and, potentially, waypoints of a taxi path to be followed to reach the destination. Based on these inputs, a path trajectory module 104 can be configured to derive and generate from the taxi path described in the digital taxi clearance received from ATC equipment 10 a taxi path trajectory from the aircraft's location to the designated designation.

Based on this taxi path trajectory, a guidance module 105 can be configured to automatically compute guidance instructions to be addressed to aircraft control 110 for the aircraft 1000 to follow the taxi path trajectory. Aircraft control 110 corresponds for example to a FCGS (Flight Control and Guidance System) of the aircraft 1000. Thus, following receipt of the digital taxi clearance, the aircraft 1000 can taxi substantially automatically to the destination.

In some embodiments, a virtual assistant module 120 can be configured to provide further inputs to the guidance module 105 to adapt and/or modify the taxi path trajectory based on any of a variety of additional factors. For this function, the virtual assistant module 120 can be configured to derive information from the collaborative map such that the traffic at the airport can be forecasted. In this way, it is possible for the virtual assistant module 120 to generate a modified taxi path trajectory based on predetermined constraints to be fulfilled during taxiing and the information derived from the collaborative map. The virtual assistant module 120 is thus able to predict in an accurate way if the taxi operations constraints can be fulfilled (e.g., taxi time with regards to departure slot, brakes temperature at the end of the taxi phase), and/or to provide outputs to the pilot to allow a continuous monitoring of tasks that allow optimization of missions of the aircraft taxiing on the ground and in flight. The guidance module 105 can then be configured to compute the guidance instructions based on the taxi path trajectory modified by the virtual assistant module 120.

In some embodiments, for example, the virtual assistant module 120 can identify a best guidance strategy to the guidance module 105, provide a monitoring of the constraints to be fulfilled during taxi, provide all required computation up to the take-off (e.g., take-off speeds computation, required runway length), and/or determine full mission feasibility. For example, in some embodiments, the virtual assistant module 120 can extract weather and Notice to Air Men (NOTAM) information, as well as documentation data, and generate a performance forecast based on the weather and NOTAM information and the documentation data. In some embodiments, the virtual assistant module 120 is configured to predict a takeoff time, taxi time, and flight time based on the flight plan and the weather and NOTAM information and the documentation data, predict a trajectory of the aircraft 1000 based on the extracted data and the predicted takeoff time, taxi time, and flight time, and modify the aircraft trajectory in real time depending on a weather event during the flight and other external events.

In some embodiments, the guidance module 105 can receive further inputs in parallel from manual controls 130 onboard the aircraft 1000 such that the pilot can provide inputs to modify the taxi path trajectory or operation of the aircraft 1000 as needed, such as to adjust a taxi speed and/or speed management strategy. One or more displays, such as head-up displays, within the cockpit of the aircraft 1000 can provide information to the pilot regarding computed guidance instructions during the taxi phase.

In addition, in some embodiments, with digital taxi clearance instructions being automatically received, adapted, and executed by the automated aircraft taxi system 100 as discussed herein, direct orders can be transmitted by ATC 10 to control the operation of the aircraft (e.g., "stop") instead of using conventional communications systems (e.g., radio) to relay such orders to the pilot.

In addition to the automatic computation of guidance instructions based on data in the airport map (e.g., collaborative map) and further inputs from the virtual assistant module 120 and the manual controls 130, the automated aircraft taxi system 100 is further configured to provide automated protections against incursion into incursion-risk areas (e.g., in case no specific clearance has been provided beforehand). The automated aircraft taxi system 100 may, in some embodiments, further be configured to provide automated protection against collisions. The automated aircraft taxi system 100 may, in some embodiments, further be configured to provide automated protection taxiway excursions.

In some embodiments, the incursion-risk area comprises a runway. In some other embodiments, the incursion-risk area comprises a taxiway crossroad.

In this regard, the automated aircraft taxi system 100 includes an aircraft protection module 106 that implements an anti-incursion function. In some embodiments, the aircraft protection module 106 further implements a collision-avoidance function.

The aircraft protection module 106 is configured to receive the taxi path trajectory on the airport map as an input to the anti-incursion function and to identify incursion risks in the taxi path trajectory to the destination. The protection module 106 can be configured to provide cues to the pilot of the aircraft 1000 upon identification of possible incursions into incursion-risk areas, such as a runway (e.g., where other aircraft may be carrying out take-off or landing). The aircraft protection module 106 is configured to adapt the guidance instructions to manage the incursion risks, such that the aircraft protection module is configured to execute the anti-incursion function, which triggers automatic braking of the aircraft and/or alerts the pilot when approaching an incursion-risk area. As detailed hereafter, the aircraft protection module 106 is configured to selectively watch out (be cautious to) or disregard an entry point to an incursion-risk area, when approaching said entry point, according to whether or not the aircraft is subject to enter said incursion-risk area through said entry point according to the taxi path trajectory on the airport map. Namely, when the aircraft is subject to enter said incursion-risk area through said entry point in view of the taxi path trajectory on the airport map, then the anti-incursion function shall watch out said entry point to the incursion-risk area. And, when the aircraft is not subject to enter said incursion-risk area through said entry point in view of the taxi path trajectory on the airport map, then the anti-incursion function can disregard said entry point to the incursion-risk area.

In some embodiments, the aircraft protection module 106 is configured to receive the taxi path trajectory on the airport map as an input to the collision-avoidance function. The aircraft protection module 106 is configured to survey the airport environment to identify obstacles. The collisions protection module 106 can be configured to provide cues to the pilot of the aircraft 1000 upon identification of possible obstacles. The collisions protection module 106 can be configured to engage the automatic braking system to prevent collisions with such obstacles and/or alert the pilot.

In addition, in some embodiments, the protection module 106 can receive inputs from a sensing system 107, which can include an array of sensors or a capture system, such as an ADS-B (Automatic Dependent Surveillance - Broadcast) system onboard the aircraft 1000, an ADS-C (Automatic Dependent Surveillance - Contract) system onboard the aircraft 1000, LIDAR (Light Detection And Ranging) systems...

By integrating these features into the automated aircraft taxi system 100, a number of advantages can be achieved. For example, in some embodiments, the pilot doesn't have to repeat inputs to the system. Instead, the execution of taxi operation is initiated upon receipt of the digital clearance, and the taxi path trajectory is completely forecasted and executed within a single system, giving the global timeline view of the taxi operation to the pilot, while removing the execution task from the pilot. In addition, whereas conventional protection systems often operate in conflict with aircraft guidance systems, the integration of the present protection module 106 with the path trajectory module 104 and guidance module 105 can provide a more seamless scheme for controlling the taxi operations, especially for managing through which entry point to an incursion risk area the aircraft will actually attempt entering the incursion risk area in question. Further, the monitoring and application of taxi constraints can be achieved with the real status of the operation (e.g., traffic on the airport, versus the ability to match the departure slot). Overall, this accumulation of these advantages ensures that the pilot's workload is reduced, and the occurrence of errors can be minimized.

For example, the integration of the protection module 106 into the automated aircraft taxi system 100 can provide improved protection from incursion-risks. Specifically, for example, knowing the taxi path trajectory of the aircraft 1000 enables the anti-incursion function to reduce spurious triggering of the automatic braking system of the aircraft 1000 and/or alerts to the pilot, as the anti-incursion function knows in advance that the taxi path trajectory bypasses one or more entry points to a incursion-risk area.

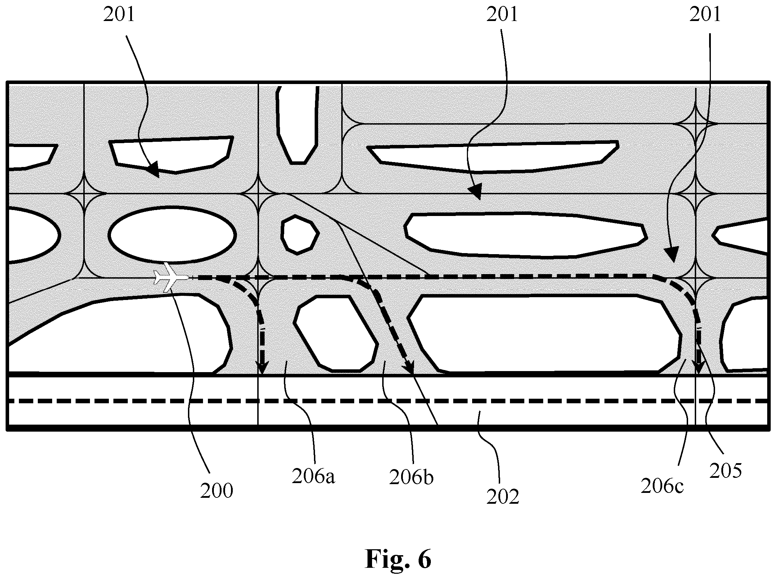

Referring to Fig. 6, for an aircraft 200 taxiing on a taxiway 201 that runs parallel to a runway 202, there may be multiple runway entry points 206a, 206b, and 206c where the aircraft 200 could potentially engage the runway. Conventional anti-incursion systems may be configured to alert the pilot and/or trigger automatic braking as the aircraft 200 approaches each of the runway entry points 206a, 206b, and 206c, particularly if the aircraft 200 is taxiing fast and could possibly turn to take one of the runway entry points. However, because the taxi path trajectory 205 is an input for the protection module 106, the runway entry points 206a and 206b, can be disregarded by the protection module 106 because it is known that the taxi path trajectory 205 will bypass these possible incursion positions. Therefore, the protection module can be configured to selectively disregard or watch out an entry point to an entry point of an incursion-risk area, when approaching said entry point, according to whether or not the aircraft is subject to enter said incursion-risk area through said entry point according to the taxi path trajectory on the airport map. As a result, no alert or intervening action need be triggered in such a situation. Accordingly, knowing the taxi path trajectory as input of the collision-avoidance function enables reducing spurious triggering of alerts and even enables reducing unnecessary triggering of the automatic braking of the aircraft 1000 and/or alerts to the pilot.

In some embodiments, the integration of the protection module 106 into the automated aircraft taxi system 100 can provide improved protection from collisions with obstacles. Specifically, for example, knowing the taxi path trajectory of the aircraft 1000 enables the collision-avoidance function to reduce spurious triggering of the automatic braking system of the aircraft 1000 and/or alert to the pilot, as the collision-avoidance function knows in advance that the taxi path trajectory does not collide with detected obstacles.

Moreover, in some embodiments, the collision-avoidance function can be configured to detect uncertainty that detected obstacles will not interfere with the taxi path trajectory as defined, and the collision-avoidance function can be configured to consequently adapt the taxi path trajectory in order to provide margin to avoid or get around the detected obstacles, preferably without having recourse to the automatic braking system of the aircraft 1000 and/or alerts to the pilot. This can be achieved thanks to the knowledge of the obstacles in question (position and potential movements) and the knowledge of the taxi path trajectory as originally foreseen by the path trajectory module 104. The guidance module 105 can then be configured to compute the guidance instructions based on the taxi path trajectory modified by the collision-avoidance function.

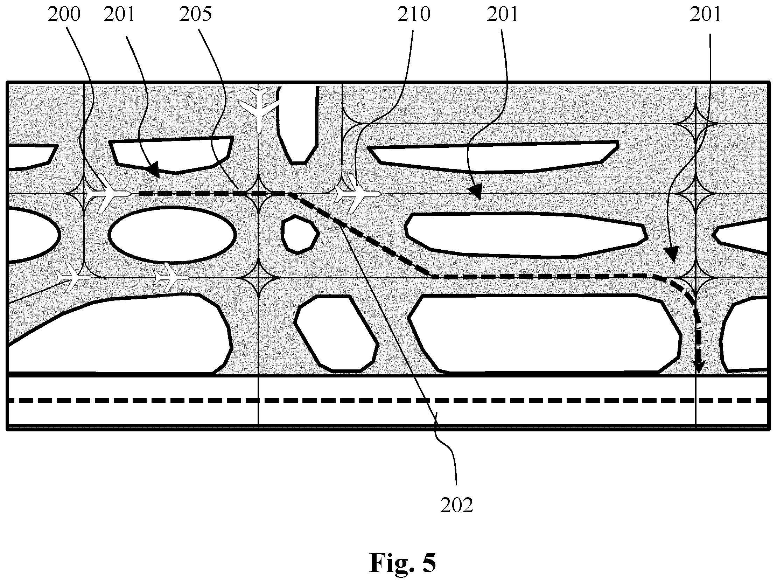

Referring to **Fig. 5****,** conventional collision protection functions may identify a risk that an aircraft 200 traveling forward along a taxiway 201 may collide with another aircraft 210 that is also positioned on taxiway 201. Because an intended taxi path trajectory 205 that is generated by the path trajectory module 104 is an input for the protection module 106, however, the collision-avoidance function of the protection module 106 is provided with information that the intended taxi path trajectory 205 of the aircraft 200 will avoid the other aircraft 210. As a result, no alert or intervening action need be triggered in such a situation.

Therefore, the collision-avoidance function can be configured to selectively disregard or watch out an obstacle according to whether or not the obstacle collides with the taxi path trajectory. Accordingly, knowing the taxi path trajectory as input of the collision-avoidance function enables reducing spurious triggering of alerts to the pilot and even enables reducing unnecessary triggering of the automatic braking of the aircraft 1000.

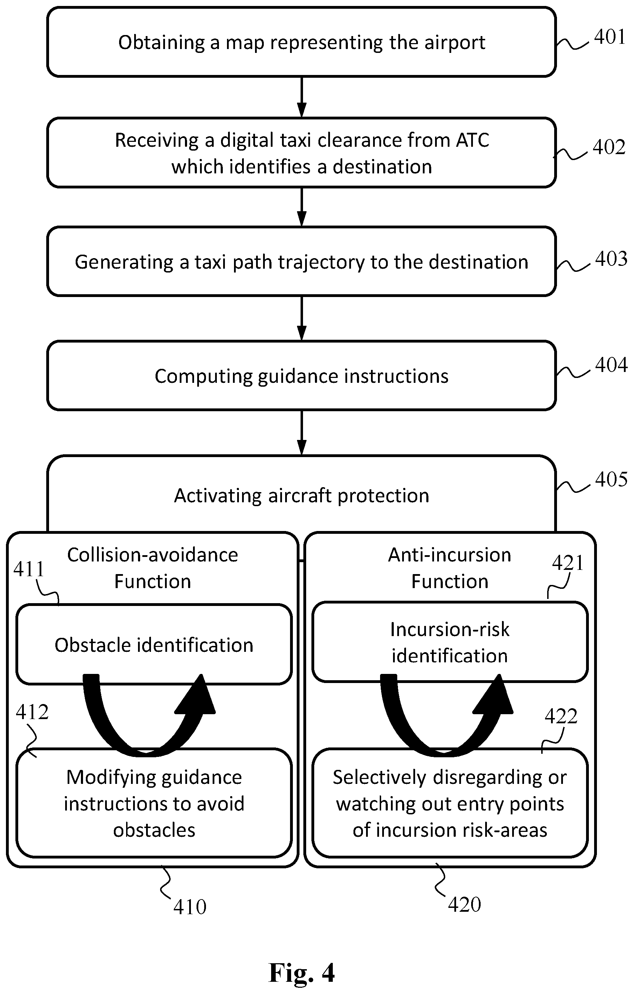

**Fig. 4** schematically represents an algorithm for activating protection functions, namely the anti-incursion function and further preferably the collision-avoidance function, in one embodiment.

In a step 401, the automated aircraft taxi system 100 obtains an airport map representing the airport environment.

In a step 402, the automated aircraft taxi system 100 obtains a digital taxi clearance from the ATC equipment 10, the digital taxi clearance identifying a destination within the airport environment to which the aircraft 1000 is instructed to taxi.

In a step 403, the automated aircraft taxi system 100 generates a taxi path trajectory to the destination on the airport map, for example as many conventional navigation systems do.

In a step 404, the automated aircraft taxi system 100 computes guidance instructions based on the taxi path trajectory, so that the guidance instructions would enable automatically guide the aircraft 1000 within the airport environment according to the taxi path trajectory until reaching the destination.

In a step 405, the automated aircraft taxi system 100 activates at least one aircraft protection. In a step 420, the automated aircraft taxi system 100 activates the anti-incursion function. In a step 410, the automated aircraft taxi system 100 preferably activates the collision-avoidance function.

Within the anti-incursion function, in a step 421, incursion-risks are identified. And in a step 422, the automated aircraft taxi system 100 selectively disregards or is cautious to entry points to corresponding incursion-risk area with triggering of auto-braking system and/or alerts to the pilot. The anti-incursion function selectively disregards or watches out entry points, when approaching said entry points, according to whether or not the aircraft 1000 is subject to enter said incursion-risk area through said entry points according to the taxi path trajectory on the airport map. Loops can be performed between the steps 421 and 422 all along the taxi path trajectory.

Within the collision-avoidance function, in a step 411, obstacles are identified. And in a step 412, the automated aircraft taxi system 100 modifies guidance instructions to avoid the identified obstacles. Getting around the identified obstacles (i.e., changing the taxi path trajectory) and/or triggering the auto-braking system are possible modifications of the guidance instructions. Loops can be performed between the steps 411 and 412 all along the taxi path trajectory. In some embodiments, one or more obstacles may be disregarded according to whether or not the obstacle in question collides with the taxi path trajectory.

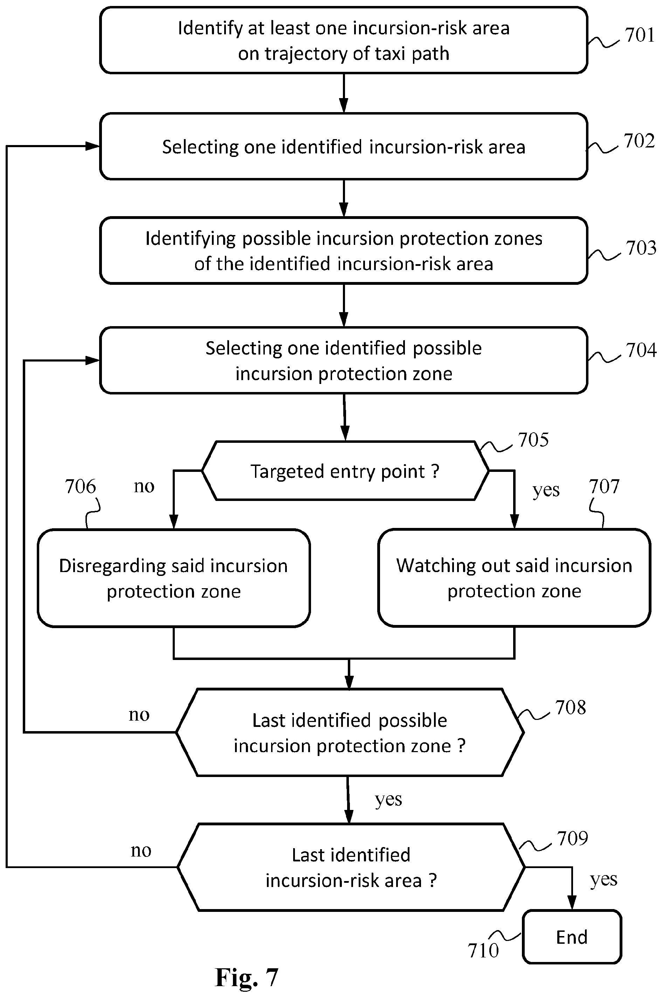

Fig. 7 schematically represents an algorithm for selectively activating the anti-incursion function, according to one embodiment.

In a step 701, the automated aircraft taxi system 100 identifies at least one incursion-risk area on the taxi path trajectory within the airport environment. The incursion-risk area is for example a runway designated from take-off of the aircraft 1000. The incursion-risk area is for example an intervening runway that the aircraft 1000 needs to cross to reach the destination within the airport environment. It can be noted that, when the destination is an airport's gate, there may be no incursion-risk area on the taxi path trajectory, i.e., when there is intervening runway to be crossed to reach the destination; and the destination is a runway from which the aircraft 1000 is expected to take-off, said runway is one incursion-risk area and any intervening runway to be crossed to reach the destination is an additional incursion-risk area.

In a step 702, the automated aircraft taxi system 100 selects one incursion-risk area among the at least one incursion-risk area identified in the step 701, if any. If no incursion-risk area has been identified in the step 701, then the algorithm moves to a step 710 where the algorithm ends.

In a step 703, the automated aircraft taxi system 100 identifies possible incursion protection zones of the incursion-risk area selected in the step 702. Such an incursion protection zone is a taxiway zone covering an entry point to the incursion-risk area in question. When reaching such an incursion protection zone, when not disregarded by the anti-incursion function, the automated aircraft taxi system 100 is configured to trigger the auto-braking system and/or alerts to the pilot in situations where the pilot does not instruct the aircraft 1000 to brake, unless a runway clearance has been received from the ATC equipment 10 which allows the aircraft 1000 to enter the incursion-risk area. The anti-incursion function thus prevents hazardous entry into the incursion-risk area.

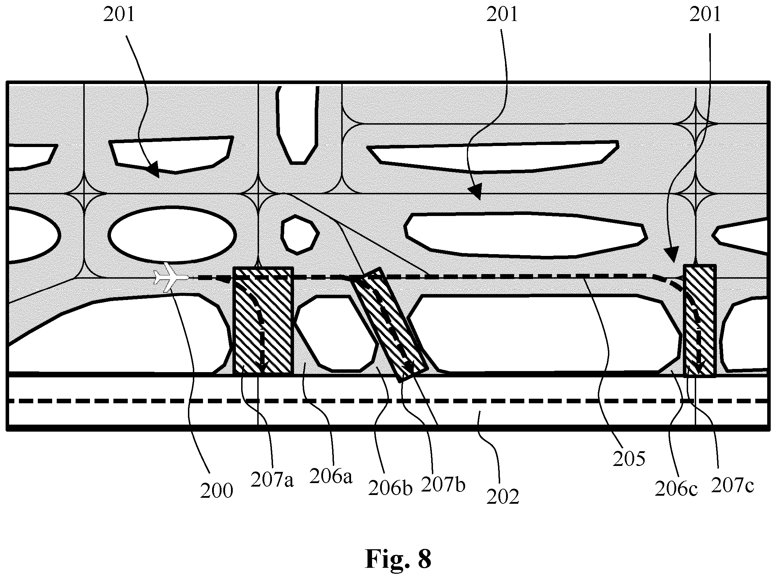

Referring to **Fig. 8****,** considering an incursion-risk area formed by a runway 202 which is on a taxi path trajectory 205 of an aircraft 200 traveling forward along a taxiway 201, multiple runway entry points 206a, 206b, and 206c exist along the taxi path trajectory 205 for the runway 202. Each entry point 206a, 206b, and 206c are associated with a respective incursion protection zone 207a, 207b, 207c. Conventional anti-incursion systems may be configured to alert the pilot and/or trigger automatic braking as the aircraft 200 enters any one of the incursion protection zones 207a, 207b, 207c. In order to avoid unnecessary alerts and/or auto-braking for entry points 206a, 206b to be bypassed according to the taxi path trajectory 205, the automated aircraft taxi system 100 selectively decides to disregard or watch out the possible entry points, by taking into account the taxi path trajectory, as disclosed hereafter.

Thus, in a step 704, the automated aircraft taxi system 100 selects one incursion protection zone among the at least one incursion protection zone identified in the step 703.

Then, in a step 705, the automated aircraft taxi system 100 checks whether or not the selected incursion protection zone corresponds to a targeted entry point to the incursion-risk area in question in view of the taxi path trajectory. Referring to Fig. 8, the targeted entry point to the runway 202 is the entry point 206c in view of the taxi path trajectory 205, whereas the entry points 206a, 206b are supposed to be bypassed. When the selected incursion protection zone corresponds to the targeted entry point to the incursion-risk area, a step 707 is performed; otherwise, a step 706 is performed.

In the step 706, the automated aircraft taxi system 100 configures the anti-incursion function to disregard said selected incursion protection zone (since the corresponding entry point to the incursion-risk area is bypassed, in view of the taxi path trajectory). And a step 708 is then performed.

In the step 707, the automated aircraft taxi system 100 configures the anti-incursion function to watch out said selected incursion protection zone (since the corresponding entry point to the incursion-risk area is the effective (targeted) entry point to the incursion-risk area, in view of the taxi path trajectory). And the step 708 is then performed.

In the step 707, the automated aircraft taxi system 100 checks whether or not the last possible incursion protection zone among the at least one incursion protection zone identified in the step 703 has been selected and processed. When at least one incursion protection zone remains to be processed for said incursion-risk area, the step 704 is repeated for selecting another incursion protection zone that remains to be processed for said incursion-risk area; otherwise, a step 709 is performed.

In the step 709, the automated aircraft taxi system 100 checks whether or not the last incursion-risk area identified in the step 701 has been processed. When at least one incursion-risk area remains to be processed, the step 702 is repeated for selecting another incursion-risk area that remains to be processed for said taxi path trajectory; otherwise, the algorithm moves to the step 710 where the algorithm ends.

As used herein, an element or operation recited in the singular and proceeded with the word "a" or "an" should be understood as not excluding plural elements or operations, unless such exclusion is explicitly recited. Furthermore, references to "one embodiment" of the present disclosure are not intended to be interpreted as excluding the existence of additional embodiments that also incorporate the recited features.

## Claims

1. An automated aircraft taxi system (100) for an aircraft (1000), which comprises:
- a mapping module (102) configured to obtain (401) an airport map representing an airport environment;
- a path trajectory module (104) configured to receive (402) a digital taxi clearance identifying a destination within the airport environment and to generate (403) a taxi path trajectory to the destination on the airport map;
- a guidance module (105) configured to compute (404) guidance instructions based on the taxi path trajectory; and
- a protection module (106) configured to receive the taxi path trajectory on the airport map, to identify (421) incursion risks on the taxi path trajectory to the destination and to adapt the guidance instructions to manage the incursion risks, such that the protection module (106) is configured to execute an anti-incursion function (420) that triggers automatic braking of the aircraft (1000) and/or alert the pilot when approaching an incursion-risk area,
wherein the anti-incursion function (420) is configured to selectively disregard or watch out (422) an entry point (206a, 206b, 206c) to an incursion-risk area (202) when approaching said entry point (206a, 206b, 206c) to the incursion-risk area (202), according to whether or not the aircraft is subject to enter said incursion-risk area (202) through said entry point (206a, 206b, 206c) according to the taxi path trajectory on the airport map.

2. The automated aircraft taxi system according to claim 1, wherein the incursion-risk area comprises a runway.

3. The automated aircraft taxi system (100) according to claim 1 or 2, wherein for each incursion-risk area (202) along the trajectory path on the airport map, the anti-incursion function (420) is configured to identify (703) possible incursion protection zones (207a, 207b, 207c) of the incursion-risk area (202) in question, such an incursion protection zone (207a, 207b, 207c) being a taxiway zone covering an entry point (206a, 206b, 206c) to the incursion-risk area (202) in question, and to check (705) whether or not each incursion protection zone (207a, 207b, 207c) corresponds to a targeted entry point to the incursion-risk area (202) in question in view of the taxi path trajectory, and
wherein the automated aircraft taxi system (100) is configured to configure (706) the anti-incursion function (420) to disregard each incursion protection zone for any entry point to the incursion-risk area to be bypassed according to the taxi path trajectory.

4. The automated aircraft taxi system (100) according to any one of claims 1 to 3, wherein the protection module (106) is configured to execute a collision-avoidance function (410) that triggers automatic braking of the aircraft and/or alert the pilot when approaching an obstacle,
wherein the collision-avoidance function (410) is configured to selectively disregard or watch out an obstacle (210) according to whether or not the obstacle (210) collides with the taxi path trajectory (205).

5. The automated aircraft taxi system (100) according to any one of claims 1 to 4, wherein the airport map identifies traffic within the airport environment.

6. The automated aircraft taxi system (100) according to claim 5, wherein the airport map is a collaborative map that includes surrounding airport traffic information based on inputs from several sources including taxi clearances from an Air Traffic Control equipment (10) and flight dispatch from Operations Control Center equipment (20).

7. The automated aircraft taxi system (100) according to claim 6, further comprising a virtual assistant module (120) configured to derive information from the collaborative map such that the traffic at the airport is forecasted to generate a modified taxi path trajectory based on predetermined constraints to be fulfilled during taxiing and the information derived from the collaborative map;
wherein the guidance module (105) is configured to compute the guidance instructions based on the modified taxi path trajectory.

8. An automated aircraft taxi method executed by an automated aircraft taxi system (100) in an aircraft (1000), which comprises:
- obtaining (401) an airport map representing an airport environment;
- receiving (402) a digital taxi clearance identifying a destination within the airport environment and generating (403) a taxi path trajectory to the destination on the airport map;
- computing (404) guidance instructions based on the taxi path trajectory; and
- identifying (421) incursion risks on the taxi path trajectory to the destination and adapting the guidance instructions to manage the incursion risks, such that an anti-incursion function (420) that triggers automatic braking of the aircraft and/or alert the pilot when approaching an incursion-risk area is executed,
wherein the anti-incursion function selectively disregards or watches out (422) an entry point (206a, 206b, 206c) to an incursion-risk area (202) when approaching said entry point (206a, 206b, 206c) to the incursion-risk area (202), according to whether or not the aircraft (1000) is subject to enter said incursion-risk area (202) through said entry point (206a, 206b, 206c) according to the taxi path trajectory on the airport map.

9. A computer program product comprising executable instructions, which when executed by a processing circuit of a computing device causes the computing device to execute the method according to claim 8.

10. A non-transitory computer-readable storage medium having executable instructions stored thereon, which when read from the non-transitory computer-readable storage medium and executed by a processing circuit of a computing device causes the computing device to execute the method according to claim 8.

11. An aircraft (1000) comprising the automated aircraft taxi system (100) according to any one of claims 1 to 7.
